# EUROPÄISCHE PATENTSCHRIFT

(11) **EP 1 678 993 B1**
(45) Veröffentlichungstag und Bekanntmachung des Hinweises auf die Patenterteilung: **09.05.2007**
(21) Anmeldenummer: 04817391.8
(22) Anmeldetag: 28.10.2004
(51) Int. Cl.: H05K 7/20, H01G 9/08, H01G 2/08, H01M 8/02, H01M 8/12, H01C 1/084

(54) **GEHÄUSEBECHER FÜR EIN ELEKTRONISCHES BAUTEIL MIT INTEGRIERTEM KÜHLKÖRPER**
HOUSING CUP FOR AN ELECTRONIC COMPONENT WITH INTEGRATED COOLING BODY
BOITIER CYLINDRIQUE POUR UN COMPOSANT ELECTRONIQUE A DISSIPATEUR THERMIQUE INTEGRE

(30) Priorität: 31.10.2003 DE 10350896
(43) Veröffentlichungstag der Anmeldung: 12.07.2006
(73) Patentinhaber: SIEMENS AKTIENGESELLSCHAFT, 80333 München (DE)
(72) Erfinder: REGENFUS, Lothar, 91077 Neunkirchen (DE)
(86) Internationale Anmeldenummer: PCT/EP2004/052685
(87) Internationale Veröffentlichungsnummer: WO 2005/043970

(56) Entgegenhaltungen:
- EP-A- 0 109 557
- EP-A- 0 591 664
- DE-C- 869 509
- DE-C1- 19 817 493
- US-A1- 2003 047 302
- US-B1- 6 189 363

## Beschreibung

Die Erfindung bezieht sich auf ein Gehäuse für ein elektronisches Bauteil, im Wesentlichen bestehend aus einem Gehäusebecher.

Beim Betrieb von elektronischen Bauteilen entsteht in Abhängigkeit ihres konkreten Einsatzgebietes z.T. erhebliche Verlustleistung in Form von Wärme. Höhere Verluste haben eine erhöhte Wärmebeanspruchung zur Folge. Die Wärmebeanspruchung hat einen entscheiden Einfluss auf die Verringerung der Lebensdauer des elektronischen Bauteils. Diese Wärme muss über das Gehäuse des elektronischen Bauteils abgeleitet werden. Die Fähigkeit des Gehäuses zur Wärmeableitung bestimmt somit wesentlich die Lebensdauer, das konkrete Einsatzgebiet und die elektrische Auslegung des elektronischen Bauteils. Eine verbesserte Wärmeableitung bedeutet i.d.R. eine erhöhte Strombelastbarkeit oder die Zulassung höherer Umgebungstemperaturen. Um die Erwärmung in elektronischen Bauteilen zu reduzieren, werden diese z.T. überdimensioniert oder es werden Aufgaben in elektronischen Schaltungen durch zusammengeschaltete Anordnungen auf mehrere i.d.R. gleichartige elektronische Bauteile aufgeteilt. Dies ist beispielsweise von der Parallelschaltung von Kondensatoren bekannt. Dadurch werden Belastungen bei gleichzeitiger Vergrößerung der Kühloberflächen für einzelne Bauteile reduziert. Alternativ wird häufig ein Kühlkörper, insbesondere durch Verschraubung, an dem Gehäuse des elektronischen Bauteils befestigt. Der Wärmeübergang zwischen dem elektronischen Bauteil und dem Kühlkörper kann durch eine Wärmeleitfolie "Thermopads" als Zwischenlage oder durch entsprechende Wärmeleitpasten noch verbessert werden.

Aus der DE 198 17 493 C1 ist ein Elektrolytkondensator bekannt, dessen Gehäuse mit einer Anzahl von Kühlrippen versehen ist. Das Gehäuse des bekannten Kondensators ist als Aluminiumgussteil ausgebildet.

Gehäuse für elektronische Bauteile sind oft in zylindrischer Form ausgeprägt. Bei diesen Gehäusen kann, bedingt durch den inneren Aufbau und in Abhängigkeit von der Art des elektronischen Bauelements, einer Wärmeabfuhr über den Zylinderboden eine entscheidende Bedeutung zukommen. Dies ist insbesondere bei den elektronischen Bauelementen der Fall, bei denen in radialer Richtung die Wärmeleitfähigkeit insbesondere durch deren inneren Aufbau geringer ist. Als zusätzlicher Wärmewiderstand wirkt hier der in einigen Fällen bis zu mehrere Millimeter breite Luftspalt zwischen dem elektronischen Bauelement und dem Gehäuse.

Vergleichsweise beeinträchtigt kann jedoch auch die Wärmeableitung über den Becherboden sein, da auch dort keine für die Wärmeableitung optimale Kontaktierung des Becherbodens mit dem elektronischen Bauteil ohne Zusatzmaßnahmen erreichet wird. Es ist bekannt, dass man aus diesem Grunde beispielsweise bei einem Kondensator die Kathodenfolie am unteren Ende des Wickels überstehen lässt, um so auf einer Seite eine stark verbesserte Wärmeanbindung des Wickels an den Becherboden zu bewerkstelligen.

Die Überdimensionierung von elektronischen Bauteilen ist wegen des erhöhten Materialbedarfs nachteilig, ebenso ist die Parallelschaltung einer erhöhten Anzahl von elektronischen Komponenten aufgrund der höheren Herstellkosten und des erhöhten Montageaufwandes nachteilig. Auch die nachträgliche Befestigung eines Kühlkörpers auf den Gehäusen von elektronischen Bauteile ist Nachteiligerweise mit einem vergleichsweise hohen Montageaufwand verbunden.

Der Erfindung liegt die Aufgabe zugrunde, die Wärmeabgabefähigkeit eines elektronischen Bauteils zu verbessern.

Diese Aufgabe wird erfindungsgemäß durch einen Gehäusebecher für ein elektronisches Bauteil gelöst, der in Fließpresstechnik hergestellt und dadurch gekennzeichnet ist, dass der Becherboden zu einem mit dem Gehäusebecher einstückigen Kühlkörper ausgeformt ist.

Durch die Integration des Kühlkörpers in den Gehäusebecher kann die Strombelastbarkeit des elektronischen Bauteils gegenüber einem entsprechenden elektronischen Bauteil mit glatter Gehäusewand wesentlich, in Abhängigkeit von der Art des elektronischen Bauteils um mehr als 100 %, gesteigert werden. Dabei fallen keine wesentlichen Mehrkosten bei der Herstellung des Gehäusebechers an, zumal der Kühlkörper bei der Prägung des Gehäusebechers in demselben Arbeitsschritt mitgeprägt wird. Die Kühlwirkung des Gehäusebechers wird auch dadurch gesteigert, dass dieser in Fließpresstechnik hergestellt ist. Durch die Verdichtung des Gehäusematerials und durch die im Zuge des Materialflusses ausgebildete Materialstruktur wird die Wärmeleitfähigkeit des Gehäusebechers günstig beeinflusst.

In bevorzugter Ausführung umfasst der Kühlkörper eine Anzahl von Vorsprüngen, die im Wesentlichen in Axialrichtung des Gehäusebechers von dem Becherboden abstehen. In zweckmäßigen Varianten sind diese Vorsprünge wahlweise stiftartig, prismenartig oder lamellenartig ausgebildet. Verschiedenartige Formen von Vorsprüngen können darüber hinaus auch in Kombination verwendet werden.

Die Grundform des Gehäusebechers ist im Wesentlichen zylinderförmig. Die Zylinderform des Gehäusebechers hat sich insbesondere aufgrund ihrer hervorragende Druckstabilität als vorteilhaft erwiesen.

In einer weiteren vorteilhaften Variante, insbesondere bei der Zusammenschaltungen von mehreren elektronischen Bauteilen, wird der Kühlkörper oder wenigstens einer seiner axialen Vorsprünge als mechanisches Führungselement genutzt. Dies kann vorteilhaft insbesondere in Anordnungen Verwendung finden, in denen größere elektronische Bauteile zu Mehrkomponentenanordnungen zusammengeschaltet werden müssen oder, wo aufgrund des besonderen Einsatzfalles des Produktes eine erhöhte Schock- und Rüttelfestigkeit erforderlich ist.

Eine vorteilhafte Ausführung ergibt sich, wenn der Kühlkörper direkt oder indirekt mittels eines Fluids gekühlt wird. Bei der direkten Kühlung wird der Kühlkörper direkt vom Fluid umspült, z.B. von entionisiertem Wasser. In der indirekten Variante wird das zur mechanischen Führung des elektronischen Bauteils verwendete Element vom Fluid durchflossen oder der Kühlkörper selbst ist so ausgebildet, dass er mit Kühlelementen (Kühlschläuche, Kühlröhrchen) verbunden werden kann. Auf diese Weise kann ein maximaler Wärmeabtransport von der Gehäuseoberfläche erreicht werden.

Die Aufgabe wird insbesondere durch einen Kondensator - speziell durch einen Elektrolytkondensator mit einer der vorstehend beschriebenen Ausführungsform des Gehäusebechers gelöst. Im Kondensator entstehen in besonderer Weise unter Wechselspannung oder Spannungen von erhöhter Welligkeit aufgrund des resultierenden Wechselstromes oder des resultierenden Stromes von erhöhter Welligkeit und des vergleichsweise höheren Ersatzserienwiderstandes höhere Verluste. Der Lebensdauerverbrauch des Kondensators und damit auch die Verschlechterung seiner elektrischen Parameter (Kapazität) steht in besonders hoher und direkter Abhängigkeit zu der Wärmeentwicklung im Kondensator. Bedingt durch den inneren Aufbau des Bauelements kommt der Wärmeabfuhr über den Becherboden beim Kondensator eine entscheidende Rolle zu, da in radialer Richtung die Wärmeleitfähigkeit aufgrund seines besonderen Aufbaus eingeschränkt ist. Als zusätzlicher Wärmewiderstand wirkt der bis zu mehrere Millimeter breite Luftspalt zwischen Wickel und Seitenwand.

Eine nochmals verbesserte Kühlung des Kondensators wird dann erreicht, wenn der Kondensatorwickel bestehend aus zwei Kondensatorfolien und einem Dielektrikum derart gewickelt ist, dass eine Kondensatorfolie aus dem Kondensatorwickelboden herausragt und damit der zum Kühlkörper ausgeformte Becherboden direkt mit der herausragenden Kondensatorfolie kontaktiert ist.

Gegenüber der Kontaktierung der Kondensatorfolie mit einem glatten Becherboden ohne zusätzlich ausgeformten Kühlkörper oder eines zum Kühlkörper ausgeformten Becherbodens ohne direkte Kontaktierung der Kondensatorfolie mit dem Becherboden kann die Wärmeabgabefähigkeit und damit die Wechselstrombelastung und/oder Lebensdauer des Kondensators nochmals um ein vielfaches gesteigert werden. Durch die Anordnung des Kühlkörpers am Becherboden wird eine besonders effektive Wärmeableitung erzielt, da am Becherboden der thermische Kontakt zwischen dem Gehäusebecher und dem Kondensatorwickel des Kondensators besonders gut ist.

Die Aufgabe wird erfindungsgemäß weiter durch ein Herstellungsverfahren zur Herstellung des o.g. Gehäusebechers gelöst.

Danach ist der Gehäusebecher des elektronischen Bauteils durch Fließpresstechnik hergestellt. Im Zuge des Pressvorgangs ist dabei in den Becherboden ein einstückiger Kühlkörper eingeformt. Das erfindungsgemäße Herstellungsverfahren basiert auf einem Fließpressverfahren unter Verwendung einer Matrize, die in einem Bodenbereich mit der Negativform des auszubildenden Kühlkörpers versehen ist.

Die mit der Erfindung erzielten Vorteile bestehen insbesondere darin, dass die Strombelastbarkeit des elektronischen Bauteils durch Verbesserung der Wärmeausleitung an die Gehäuseoberfläche und durch Verbesserung des Wärmeabtransports von der Gehäuseoberfläche wesentlich erhöht wird, ohne das nennenswerte Mehrkosten für die Herstellung des Bauteils anfallen. Die höhere Strombelastbarkeit des elektronischen Bauteils ermöglicht eine Kostenreduzierung bei der Realisierung elektronischer Schaltungen, zumal die Anzahl zu verschaltender elektronischer Komponenten verringert werden kann. Bei gleicher Lebensdauer verkraftet das erfindungsgemäß bestückte elektronische Bauteil nämlich eine höhere Strombelastung als ein herkömmliches mit glatter Becherwand. Anders herum wird bei gleich bleibender Belastung des elektronischen Bauteils eine höhere Lebensdauer erzielt. Des Weiteren ist der erfindungsgemäße Gehäusebecher besonders gut handhabbar, zumal der zusätzliche Aufwand zur Aufbringung von Kühlkörpern entfallen kann.

Der erhöhte Wärmeabtransport von der Gehäuseoberfläche wird durch die Integration eines Kühlkörpers in den Becherboden gewährleistet. Vorzugsweise in Mehrkomponentenanordnungen wird durch direkte Kontaktierung des Kühlkörpers mit separaten luft- oder fluidgekühlten Elementen der Wärmetransport positiv beeinflusst. Eine nochmals wesentliche Erhöhung der Wärmeausleitung wird durch die direkte Kontaktierung des Kondensatorwickels mit dem Becherboden erreicht.

Nachfolgend werden Ausführungsbeispiele der Erfindung anhand von Zeichnungen näher erläutert. Darin zeigen:
- FIG 1: in einem schematischen Querschnitt ein Gehäuse für ein elektronisches Bauteil mit einem Gehäusebecher und einem in den Becherboden integrierten Kühlkörper,
- FIG 2: eine Draufsicht auf den Becherboden und den mit stiftartigen Vorsprüngen versehenen Kühlkörper,
- FIG 3: in einer Darstellung gemäß FIG 2 eine alternative Ausführung des Kühlkörpers, bei welcher die Vorsprünge lamellenartig ausgebildet sind,
- FIG 4: einen zylindrischen Kondensatorwickel, derart ausgeprägt, dass die Kathodenfolie am Kondensatorwickelboden herausragt,
- FIG 5: in einem schematischen Querschnitt einen Kondensator bestehend aus einem Gehäuse gemäß FIG 1 und einem Kondensatorwickel gemäß FIG 4.
- FIG 6: Mehrkomponentenanordnung für Kondensator mit indirekter Kühlung

Einander entsprechende Teile sind in allen Figuren mit den selben Bezugszeichen versehen.

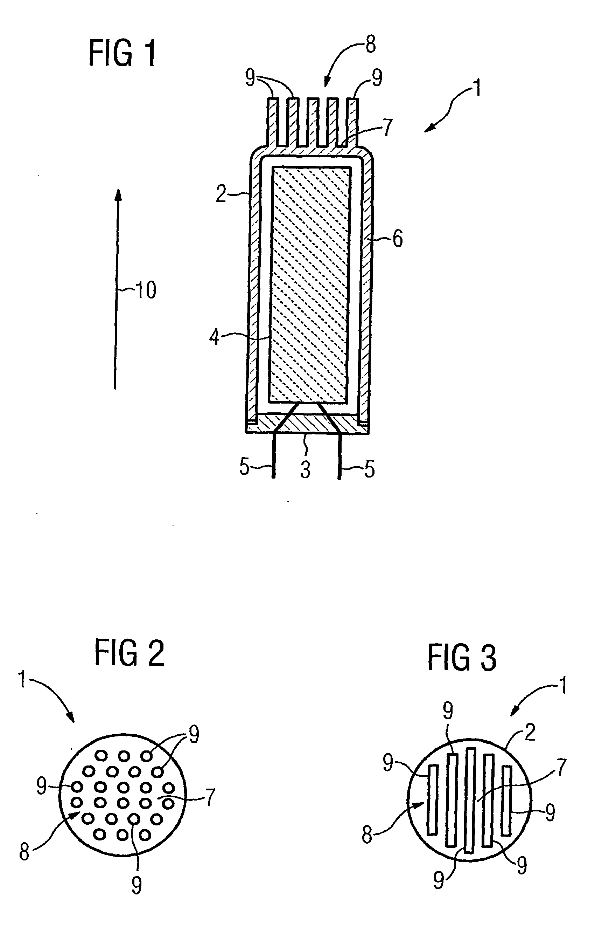

Das in FIG 1 schematisch dargestellte Gehäuse für ein elektronisches Bauteil 1 umfasst einen zylindrischen Gehäusebecher 2, der mit einem Gehäusedeckel 3 abgeschlossen ist. Im Inneren des durch den Gehäusebecher 2 und den Gehäusedeckel 3 gebildeten Gehäuses ist das elektronische Bauteil 4, welches durch zwei durch den Gehäusedeckel 3 hindurchgeführte, drahtförmige Anschlusskontakte 5 kontaktiert ist.

Der Gehäusebecher 2 weist eine rohrartige Seitenwand 6 auf, die an der dem Gehäusedeckel 3 gegenüberliegende Stirnseite von einem einstückig mit der Seitenwand 6 ausgebildeten Becherboden 7 abgeschlossen wird. Der Becherboden 7 bildet die Grundfläche eines einstückig mit dem Gehäusebecher 2 ausgebildeten Kühlkörpers 8. Der Kühlkörper 8 umfasst weiterhin eine Anzahl von Vorsprüngen 9, die ausgehend von der Außenfläche des Becherbodens 7 in Axialrichtung 10 des Gehäusebechers 2 abstehen und zueinander beabstandet sind.

Die FIG 2 und 3 zeigen in einem Blick entgegen der Axialrichtung 10 auf den Becherboden 7 zwei alternative Ausbildungen der Vorsprünge 9. Gemäß FIG 2 sind die Vorsprünge 9 stiftartig ausgebildet. Gemäß FIG 3 haben die Vorsprünge 9 die Form von Lamellen. In beiden Ausführungen entspricht der Querschnitt durch das elektronische Bauteilgehäuse 1 der Darstellung gemäß FIG 1.

Über die Ausführungen gemäß FIG 2 und FIG 3 hinausgehend könnten die Vorsprünge 9 auch (in nicht näher dargestellter Weise) prismenartig ausgebildet sein.

Der Gehäusebecher 2 ist inklusive des Kühlkörpers 8 in einem einzigen Arbeitsschritt mittels Fließpresstechnik hergestellt. Diese Technik ist bereits zur Herstellung eines herkömmlichen, glatten Gehäusebechers für einen herkömmlichen Elektrolytkondensator üblich. Zur Ausbildung des Kühlkörpers 8 wird das herkömmliche Herstellungsverfahren dahingehend modifiziert, dass die zur Herstellung des Gehäusebechers 2 verwendete Matrize einer Pressvorrichtung in einem Bodenbereich mit der Negativform des auszubildenden Kühlkörpers 8 versehen wird. Beim Pressvorgang des Gehäusebechers 2 wird der Kühlkörper 8 dann automatisch mitgeformt.

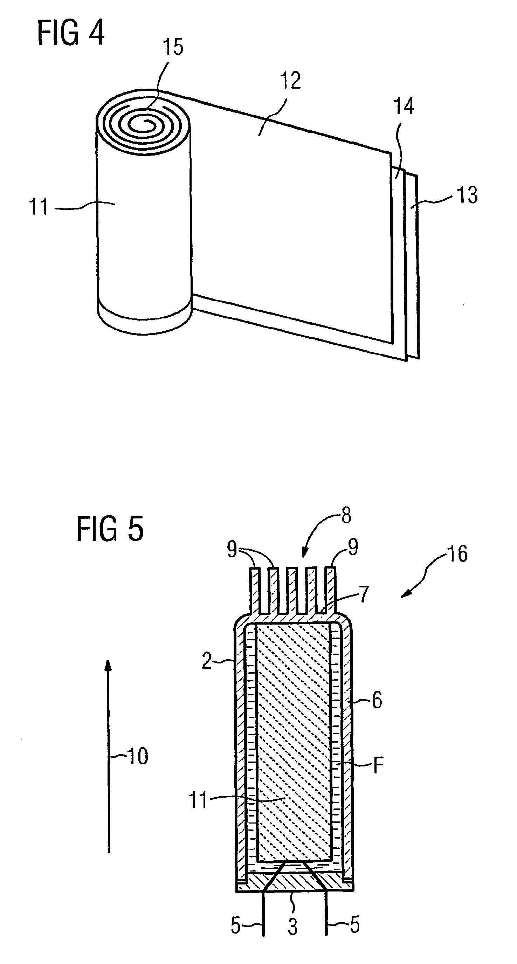

FIG 4 zeigt einen zylindrischen Kondensatorwickel 5. Der Kondensatorwickel 5 entsteht durch die Wicklung eines, mindestens aus 3 Lagen zusammensetzenden Materials. Eine Lage bildet die Kathodenfolie 12, eine andere Lage bildet ein Dielektrikum aus elektrolytgetränktes Papier 13, eine dritte Lage bildet die Anodenfolie 14. Die verschiedenen Lagen sind nicht projektionsgenau übereinanderliegend angeordnet. Der Kondensatorwickel 5 ist derart ausgeprägt, dass die Kathodenfolie 12 an einem Kondensatorwickelboden einen Versatz gegenüber der Papierlage und der Anodenfolie aufweist. Die elektrolytgetränkte Papierzwischenlage 14 isoliert somit auf beiden Seiten Kathodenfolie 12 und Anodenfolie 13 voneinander.

Der in FIG 5 schematisch dargestellte Kondensator 16 umfasst einen zylindrischen Gehäusebecher 2, der mit einem Gehäusedeckel 3 abgeschlossen ist. Im Inneren des durch den Gehäusebecher 2 und den Gehäusedeckel 3 gebildeten Gehäuses befindet sich der Kondensatorwickel 11, der durch zwei durch den Gehäusedeckel 3 hindurchgeführte, drahtförmige Anschlusskontakte 5 kontaktiert ist. Der Innenraum des Gehäuses 2,3 ist weiterhin mit einer elektrolytischen Flüssigkeit F gefüllt. Der Kondensatorwickelboden 15 kontaktiert mit seiner hervorstehenden Kondensatorfolie direkt die Innenseite des Becherbodens 7.

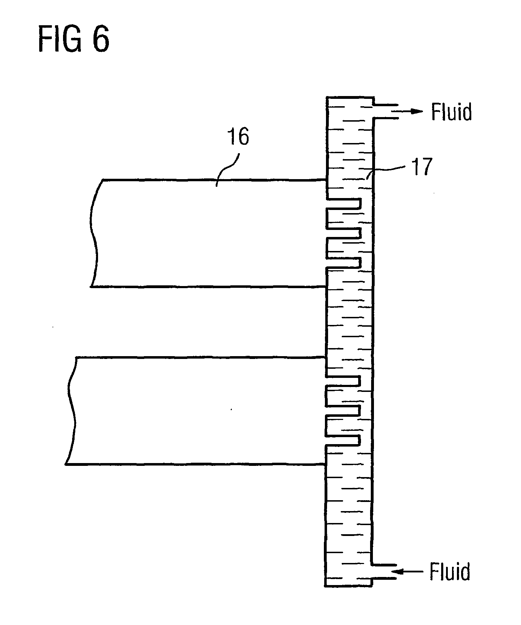

FIG 6 zeigt in schematischer Darstellung eine Anordnung von erfindungsgemäßen Kondensatoren 16 deren Kühlkörper 8 wärmeleitend mit einem mechanischen Befestigungselement 17 verbunden sind. Das mechanische Befestigungselement 17 besteht aus wärmeleitendem Material und weist Kanäle auf, die von einem Fluid als Kühlflüssigkeit durchflossen werden.

In einem nicht gezeigten Ausführungsbeispiel kann der Kühlkörper 8 eines Kondensators 16 so ausgebildet sein, dass er direkt mit einem Kühlschlauch oder -rohr verbunden werden kann. Der Kühlkörper kann beispielsweise eine Bohrung aufweisen durch die ein Kühlschlauch oder Kühlrohr geführt wird oder er kann so ausgebildet sein, dass ein Kühlschlauch oder Kühlrohr an ihm befestigt werden kann.

## Patentansprüche

1. Gehäusebecher (2) für ein elektronisches Bauteil (4), wobei der Gehäusebecher in Fließpresstechnik hergestellt ist,
**dadurch gekennzeichnet, dass** der Becherboden (7) zu einem mit dem Gehäusebecher (2) einstückigen Kühlkörper (8) ausgeformt ist.

2. Gehäusebecher (2) nach Anspruch 1,
**dadurch gekennzeichnet, dass** der Kühlkörper (8) eine Anzahl von im wesentlichen in Axialrichtung (10) von dem Becherboden (7) abstehende Vorsprünge (9) umfasst.

3. Gehäusebecher (2) nach Anspruch 1,
**dadurch gekennzeichnet, dass** mindestens einer der Vorsprünge (9) stiftartig, prismenartig oder lamellenartig ausgebildet ist.

4. Gehäusebecher (2) nach Anspruch 1,
**dadurch gekennzeichnet, dass** der Gehäusebecher (2) im wesentlichen zylinderförmig ist.

5. Gehäusebecher nach einem der vorstehenden Ansprüche,
**dadurch gekennzeichnet, dass** der Kühlkörper, insbesondere wenigstens einer seiner axialen Vorsprünge (9) zur mechanischen Führung genutzt wird.

6. Gehäusebecher nach einem der vorstehenden Ansprüche,
**dadurch gekennzeichnet, dass** der Kühlkörper, direkt oder indirekt mittels eines Fluids kühlbar ausgebildet ist.

7. Kondensator - insbesondere Elektrolytkondensator - mit einem Gehäusebecher (2) nach einem der vorstehenden Ansprüche.

8. Kondensator nach Anspruch 7 mit einem Kondensatorwickel bestehend aus zwei Kondensatorfolien (12,13) und einem Dielektrikum (14), wobei der Kondensatorwickel derart gewickelt ist, dass eine Kondensatorfolie aus dem Kondensatorwickelboden (15) herausragt,
**dadurch gekennzeichnet, dass** der Becherboden (7) mit der herausragenden Kondensatorfolie kontaktiert ist.

9. Herstellungsverfahren zur Herstellung eines Gehäusebechers nach einem der Ansprüche 1 bis 6, in dem eine Matrize verwendet wird, die im Bodenbereich mit der Negativform des auszubildenden Kühlkörpers (8) versehen ist, wobei beim Pressvorgang des Gehäusebechers (2) der Kühlkörper (8) automatisch mitgeformt mit.

10. Herstellungsverfahren nach Anspruch 9, bei dem die verwendete Matrize im Bodenbereich eine Anzahl von im Wesentlichen in Axialrichtung (10) von dem Bodenbereich abstehenden Vorsprüngen (9) umfasst.

## Claims

1. Housing cup (2) for an electronic component (4), with the housing cup being produced by extrusion,
**characterised in that**
the cup base (7) is formed into a cooling body (8) that is integral with the housing cup (2).

2. Housing cup (2) according to claim 1,
**characterised in that**
the cooling body (8) includes a number of protrusions (9) protruding from the cup base (7) substantially in the axial direction (10).

3. Housing cup (2) according to claim 1,
**characterised in that**
at least one of the protrusions (9) is embodied in pin-like, prism-like or lamination-like form.

4. Housing cup (2) according to claim 1,
**characterised in that**
the housing cup (2) is substantially cylindrical.

5. Housing cup according to one of the preceding claims,
**characterised in that**
the cooling body, and in particular at least one of its axial protrusions (9), is used for mechanical guidance.

6. Housing cup according to one of the preceding claims,
**characterised in that**
the cooling body is embodied as coolable directly or indirectly by means of a fluid.

7. Capacitor, in particular an electrolyte capacitor, having a housing cup (2) according to one of the preceding claims.

8. Capacitor according to claim 7, having a capacitor winding comprising two capacitor foils (12, 13) and a dielectric (14), with the capacitor winding being wound such that a capacitor foil protrudes out of the capacitor winding base (15),
**characterised in that**
the cup base (7) is electrically contacted by the protruding capacitor foil.

9. Production method for producing a housing according to one of claims 1 through 6, in which a matrix is used which is provided in the base region with the negative shape of the cooling body (8) to be embodied, and in the pressing operation of the housing cup (2), the cooling body (8) is automatically moulded with it.

10. Production method according to claim 9, in which the matrix used, in its base region, includes a number of protrusions (9) protruding from the base region essentially in the axial direction (10).

## Revendications

1. Boîtier (2) pour un composant (4) électronique, le boîtier étant fabriqué suivant la technique de filage, **caractérisé en ce que** le fond (7) du boîtier est formé en un dissipateur de chaleur (8) d'un seul tenant avec le boîtier (2).

2. Boîtier (2) suivant la revendication 1,
**caractérisé en ce que** le dissipateur de chaleur (8) comprend un certain nombre de saillies (9) faisant saillie sensiblement dans la direction (10) axiale du fond (7) du boîtier.

3. Boîtier (2) suivant la revendication 1,
**caractérisé en ce qu'**au moins l'une des saillies (9) est sous la forme d'une tige, d'un prisme ou d'une lamelle.

4. Boîtier (2) suivant la revendication 1,
**caractérisé en ce que** le boîtier (2) est sensiblement cylindrique.

5. Boîtier (2) suivant l'une des revendications précédentes,
**caractérisé en ce que** le dissipateur de chaleur, notamment au moins l'une de ses saillies (9) axiale, est utilisé pour le guidage mécanique.

6. Boîtier (2) suivant l'une des revendications précédentes,
**caractérisé en ce que** le dissipateur de chaleur est constitué de manière à pouvoir être refroidi directement ou indirectement au moyen d'un fluide.

7. Condensateur, notamment condensateur électrolytique, ayant un boîtier (2) suivant l'une des revendications précédentes.

8. Condensateur suivant la revendication 7 ayant un enroulement de condensateur constitué de deux feuillards (12, 13) de condensateur et d'un diélectrique (14), l'enroulement de condensateur étant enroulé de façon à ce qu'un feuillard de condensateur dépasse du fond (15) de l'enroulement de condensateur, **caractérisé en ce que** le fond (7) du boîtier est en contact avec le feuillard de condensateur qui dépasse.

9. Procédé de fabrication d'un boîtier suivant l'une des revendications 1 à 6, dans lequel on utilise une matrice qui est munie dans la partie de fond de la forme négative du dissipateur de chaleur (8) à former, le dissipateur de chaleur (8) étant formé automatiquement lors de l'opération de filage du boîtier (2).

10. Procédé de fabrication suivant la revendication 9, dans lequel la matrice utilisée comprend dans la partie de fond un certain nombre de saillies (9) faisant saillie sensiblement dans la direction (10) axiale de la partie de fond.
